# EUROPÄISCHE PATENTSCHRIFT

(11) **EP 2 329 171 B1**
(45) Veröffentlichungstag und Bekanntmachung des Hinweises auf die Patenterteilung: **15.01.2014**
(21) Anmeldenummer: 09778283.3
(22) Anmeldetag: 02.09.2009
(51) Int. Cl.: F16K 7/12, F16K 31/06

(54) **MEMBRANVENTIL**
DIAPHRAGM VALVE
VANNE À MEMBRANE

(30) Priorität: 05.09.2008 DE 102008045857
(43) Veröffentlichungstag der Anmeldung: 08.06.2011
(73) Patentinhaber: Sartorius Stedim Biotech GmbH, 37079 Göttingen (DE); GEMÜ Gebrüder Müller Apparatebau GmbH & Co. KG, 74653 Ingelfingen (DE)
(72) Erfinder: BÖTTCHER, Lars, 34212 Melsungen (DE); SCHÄFER, Jan, 34295 Edermünde (DE); WOLPERT, Kai-Uwe, 74238 Krautheim (DE); MAYER, Jürgen, 74523 Schwäbisch Hall (DE)
(74) Vertreter: Schneider, Peter Christian
(86) Internationale Anmeldenummer: PCT/EP2009/006358
(87) Internationale Veröffentlichungsnummer: WO 2010/025905

(56) Entgegenhaltungen:
- DE-A1- 19 746 763
- DE-U1-202005 002 152
- US-A- 3 154 286
- US-A- 3 174 717
- US-A- 5 758 864

## Beschreibung

### Gebiet der Erfindung

Die Erfindung betrifft ein Membranventil mit einem einen Zufluss und einen Abfluss aufweisenden Ventilkörper, einer Dichtmembran und einem die Dichtmembran mit einem Druckstück eines Antriebs verbindenden Verbindungsstück.

### Stand der Technik

Aus der DE 601 12 639 T2 und der DE 20 2005 002 152 U1 sind Membranventile bekannt, die jeweils einen Ventilkörper mit einem Zufluss und einem Abfluss aufweisen. Weiterhin weisen die Ventilkörper einen von einer Dichtmembran abdichtbaren Ventilsitz auf, wobei die Dichtmembran über ein Verbindungsstück mit einem Druckstück eines Antriebs in Verbindung steht. Die bekannten Membranen sind dabei zweischichtig ausgebildet.

Aus der DE 601 12 639 T2 ist bekannt, dass die zum Ventilkörper hin gerichtete Schicht als eine dünne Oberflächenseiten-Membran aus Fluor enthaltendem Harz und die zweite Schicht als eine Rückoberflächen-Seitenmembran ausgebildet ist, die aus auf der Rückseite der Oberflächenseiten-Membran auflaminiertem Gummi besteht. Das Verbindungsstück ist dabei als ein Einlegeteil formschlüssig mit der dünnen Dicht- bzw. Oberflächenseiten-Membran verbunden.

Nachteilig dabei ist, dass die Membran zwischen dem Ventilkörper und einem Anschlussflansch des Antriebs durch Klemmen fixiert wird. Dies führt dazu, dass bei einer Montage die Prozessseite des Ventils kontaminiert werden kann. Entsprechend kann bei einer Demontage unerwünscht Prozessflüssigkeit austreten und die Umwelt kontaminieren.

Aus der DE 44 44 782 A1 ist ein Membranventil bekannt, bei dem zwischen einem ersten Gehäuseteil und einem als Ventilkörper ausgebildeten zweiten Gehäuseteil eine Membran einspannt ist, die mit den beiden Gehäuseteilen ultraschallverschweißt ist. Die Membran ist direkt mit einem Dichtelement verbunden, über das der Ventilsitz abdichtbar ist. Über ein Pilotventil ist die Membran auf der dem Fluidraum abgewandten Seite mit Druckluft beaufschlagbar. Dabei wird die Membran mit dem Dichtelement gegen die Kraft einer auf der Fluidseite angeordneten Rückstellfeder gegen den Ventilsitz gepresst.

Nachteilig dabei ist, dass das Gehäuse nicht demontierbar und nicht als Einwegventil geeignet ist.

Schließlich sind aus der DE 102 38 585 B3 Fluidmodule bekannt, die als Mikropumpen bzw. Mikroventile ausgebildet sind. Dabei ist es zwar möglich, ein durch das Fluidmodul gebildete Fluidteil und ein Aktuatorteil zur Betätigung des Fluidteils getrennt voneinander zu realisieren, jedoch handelt es sich dabei um miniaturisierte einstückige Grundelemente deren Fluidkammer durch eine ebene Membran abdeckbar ist, die aufgrund der kleinen Abstände zum Ventilsitz durch einen einseitig wirkenden, als Piezoelement ausgebildeten Aktuator bewegbar ist. D.h., die Membran kommt ohne feste Verbindung zu dem Aktuator aus.

Nachteilig dabei ist, dass derartige Fluidmodule sich nicht einfach vergrößern lassen und wegen ihres geringen Strömungsquerschnittes daher nicht geeignet sind, als Ventile in Schlauchsystemen von Filtrationsanlagen bzw. Bioreaktoren zum Einmalgebrauch und damit verbundenen Schlauchsystemen eingesetzt zu werden.

Aus der US 5 758 864 A ist ein Membranventil mit einem einen Zufluss und einen Abfluss aufweisenden Ventilkörper, einer Dichtmembran und einem die Dichtmembran mit einem Druckstück eines Antriebs verbindenden Verbindungsstück bekannt. Dabei ist das Verbindungsstück an die Membran angeformt. Die Dichtmembran ist mit einem peripheren Wulst in einer Nut des Ventilkörpers angeordnet. Dabei drückt ein ringförmiger Ansatz des Antriebsgehäuses auf die Rückseite der Membran bzw. ringförmigen Wulst, sodass im montierten Zustand die Membran im Ventilkörper in offensichtlich herkömmlicher Weise geklemmt ist.

Aus der US 3 174 717 A ist ein Membranventil mit einem Zufluss und einem Abfluss aufweisenden Ventilkörper, einer Dichtmembran und einem die Dichtmembran mit einem Druckstück eines Antriebs verbindenden Verbindungsstück bekannt. Nachteilig auch hier ist, dass die Dichtmembran auf ihrem peripheren Umfang zwischen Ventilkörper und einem Bund eines Antriebsgehäuses durch Festklemmen fixiert wird.

Auch aus der US 3 154 286 A ist ein Membranventil mit einem einen Zufluss und einem Abfluss aufweisenden Ventilkörper, einer Dichtmembran und einem die Dichtmembran mit einem Druckstücke eines Antriebs verbindenden Verbindungsstücks bekannt. Auch hier wird die Membran auf ihrer Peripherie zwischen Ventilkörper und einem Gehäuseansatz festgeklemmt.

Aus der DE 20 2005 002 152 U1 ist ein Membranventil mit einem einen Zufluss und einen Abfluss aufweisenden Ventilkörper, einer Dichtmembran und einem die Dichtmembran mit einem Druckstück eines Antriebs verbindenden Verbindungsstück bekannt. Die DE 20 2005 002 152 U1 befasst sich vornehmlich mit dem Problem einer Verdrehsicherung des Druckstücks. Die Membran und die Gehäuseteile (Ventilkörper und Zwischenstück) werden miteinander durch vier Schrauben an Flanschabschnitten verschraubt, also explizit lösbar miteinander verbunden

Weiterhin ist aus der DE 197 46 763 A 1 ein membrangesteuertes Druckregelventil für eine Kraftstoffregelung bekannt, das ein Gehäuse aufweist, in welches zwischen dem Gehäuseoberteil und dem Gehäuseunterteil, das einen Ventilkörper bildet, in einem Bördelverband eine elastische Membran festgespannt ist. Dabei kann die Membran zusätzlich mit dem Gehäuseoberteil oder dem Gehäuseunterteil mit Ultraschall verschweißt sein. In dem Gehäuseoberteil ist eine Druckregelfeder angeordnet, die gegen einen Membranteller der Membran drückt.

Nachteilig dabei ist, dass das Druckregelventil zum einen keine auswechselbare Ventilkörpereinheit aufweist und zum anderen nicht mit einem Antrieb verbindbar ist.

### Aufgabenstellung

Aufgabe der vorliegenden Erfindung ist es daher, die bekannten Membranventile so zu verbessern, dass sie in Einwegschlauchsysteme bzw. vorsterilisierbare Filtrationssysteme zum Einmalgebrauch integriert werden können und dass sie kostengünstig herstellbar sind.

### Darstellung der Erfindung

Diese Aufgabe wird in Verbindung mit dem Oberbegriff des Anspruches 1 dadurch gelöst, dass der Ventilkörper, die Dichtmembran und das Verbindungsstück fest miteinander zu einer abgedichteten und mit dem Antrieb verbindbaren, auswechselbaren Ventilkörpereinheit verbunden sind, dass die Ventilkörpereinheit (2) zum Einmalgebrauch vorgesehen ist, dass das Verbindungsstück an die Dichtmembran angeformt ist, und dass der Ventilkörper und die Dichtmembran miteinander ultraschallverschweißt sind.

Durch die feste Verbindung von Ventilkörper, Dichtmembran und Verbindungsstück zu einer abgedichteten und auswechselbaren Ventilkörpereinheit ist es möglich, die Ventilkörpereinheit als Einwegeinheit auszubilden und das Membranventil in ein Einwegschlauchsystem bzw, eine vorsterilisierbare Filtrationsanlage zu integrieren. Die Ventilkörpereinheit lässt sich somit kostengünstig als Wegwerf- bzw. Single-use-Ventilkörpereinheit ausbilden und an einen wieder verwendbaren Antrieb ankoppeln bzw. mit diesen verbinden. Durch die feste Verbindung von Dichtmembran und Ventilkörper wird die Ventilkörpereinheit abgedichtet und Kontaminationen des Flüssigraumes bzw. der Umwelt werden vermieden. Durch die feste Verbindung des Verbindungsstückes mit der Dichtmembran kann die Dichtmembran nicht nur in ihre Schließstellung gedrückt sondern auch in ihre Öffnungsstellung gezogen werden, so dass der Flüssigkeitsraum im Ventilkörper relativ großvolumig ausgebildet sein kann, so dass ein für die Schlauchsysteme von Filtrationsanlagen ausreichender Volumenstrom erzielt werden kann. Dass das Verbindungsstück an die Dichtmembran angeformt ist, und dass der Ventilkörper und die Dichtmembran miteinander ultraschallverschweißt sind, trägt zu einer kostengünstigen einfachen Herstellung der Ventilkörpereinheit bei. Dadurch, dass die Ventilkörpereinheit zum Einmalgebrauch vorgesehen ist, ist sie geeignet, um in vorsterilisierbare Schlauchsysteme bzw. Filtrationssysteme integriert zu werden.

Nach einer weiteren bevorzugten Ausführungsform der Erfindung sind die Dichtmembran und der Ventilkörper aus Kunststoff ausgebildet.

Dies ermöglicht zum einen die Entsorgung des Einwegartikels und zum anderen ist es dadurch möglich, Ventilkörper und Dichtmembran kostengünstig miteinander durch Ultraschall zu verschweißen.

Nach einer bevorzugten Ausführungsform der Erfindung sind die Dichtmembran und der Ventilkörper aus Polyethylen (PE) ausgebildet.

Gemäß einer weiteren bevorzugten Ausführungsform der Erfindung ist antriebsseitig dem Druckstück zur Dichtmembran hin eine Druckübertragungsmembran vorgelagert, die bei mit dem Antrieb verbundener Ventilkörpereinheit an der Dichtmembran anliegt. Dabei kann bei der Demontage der Ventilkörpereinheit die Druckübertragungsmembran am Antrieb bzw. am Druckstück des Antriebes verbleiben, während lediglich die fest mit dem Ventilkörper verbundene Dichtmembran als Teil der Ventilkörpereinheit entsorgt wird.

Nach einer weiteren bevorzugten Ausführungsform der Erfindung ist die Druckübertragungsmembran aus einem Kunststoff ausgebildet. Bevorzugt wird für die Druckübertragungsmembran ein Ethylen-Propylen-Dien-Kautschuk verwendet. Durch die Druckübertragungsmembran wird zum einen die Dichtmembran geschützt und zum anderen kann die einzuleitende Kraft gerichtet vom Druckstück auf die Membran aufgebracht werden.

Gemäß einer weiteren bevorzugten Ausführungsform der Erfindung weist der Antrieb zur Ventilkörpereinheit hin ein Zwischenstück auf, dessen freies Ende mit einem freien Ende der Ventilkörpereinheit verbindbar ist. Mit Hilfe des Zwischenstückes kann zum einen der Antrieb beispielsweise an einem Blech eines Schaltschrankes befestigt werden. Zum anderen dient das dem Antrieb abgewandte freie Ende des Zwischenstückes zur Verbindung mit einem korrespondierenden freien Ende der Ventilkörpereinheit. Bevorzugt sind die freien Enden als Anschlussflansche ausgebildet, die über eine Befestigungsklammer, einer so genannten Tri-Clamp-Klammer miteinander verbunden werden. Grundsätzlich kann die Verbindung auch mit Hilfe einer Überwurfmutter, einer Verschraubung, einem Bajonettverschluss etc. erfolgen.

Nach einer weiteren bevorzugten Ausführungsform der Erfindung ist das Druckstück mit einer Ventilspindel des Antriebs verbunden, wobei das Druckstück und das Verbindungsstück miteinander verrastbar ausgebildet sind. Dadurch ist die Ventilkörpereinheit ohne Werkzeug mit dem Antrieb verbindbar. Durch die lösbare Verbindung zwischen Ventilkörper und Zwischenstück einerseits und zwischen Verbindungsstück und Druckstück andererseits kann die Ventilkörpereinheit einfach gewechselt werden, ohne den Prozessraum gegenüber der Umwelt öffnen zu müssen. Eine Reinigung der Ventilkörpereinheit ist nicht notwendig da diese nach der Verwendung entsorgt wird.

Gemäß einer weiteren bevorzugten Ausführungsform der Erfindung sind das Verbindungsstück mit Ventilkörpereinheit und das Druckstück mit Antrieb in axialer Richtung durch Drehen gegeneinander ausrichtbar und durch die Befestigungsklammer fixierbar.

Nach einer weiteren bevorzugten Ausführungsform der Erfindung ist die Ventilkörpereinheit zum Einmalgebrauch vorgesehen.
Dadurch ist sie geeignet, um in vorsterilisierbare Schlauchsysteme bzw. Filtrationssysteme integriert zu werden.

Nach einer weiteren bevorzugten Ausführungsform der Erfindung ist die Membran im Bereich des Verbindungsstückes mindestens in einer Ebene konvex und der Ventilkörper in seinem korrespondierenden Bereich entsprechend konkav ausgebildet. Durch die gewölbte Ausbildung der Dichtmembran in ihrer geschlossenen Stellung und einer entgegengesetzten Wölbung in ihrer geöffneten Stellung wird ein relativ großes Ventilkammervolumen erzielt. Weiterhin wird eine günstige Kraftverteilung zwischen Dichtmembran und Ventilsitz des Ventilkörpers erreicht und zum anderen werden scharfe Knicke bzw. starke Belastungen der Dichtmembran am Rand des Ventilsitzes vermieden.

Durch die Anordnung eines Sensors bzw. Mikroschalters im Zwischenstück ist es möglich, die korrekte Verbindung zwischen Ventilkörper und Zwischenstück zu detektieren.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

In den Zeichnungen zeigen:

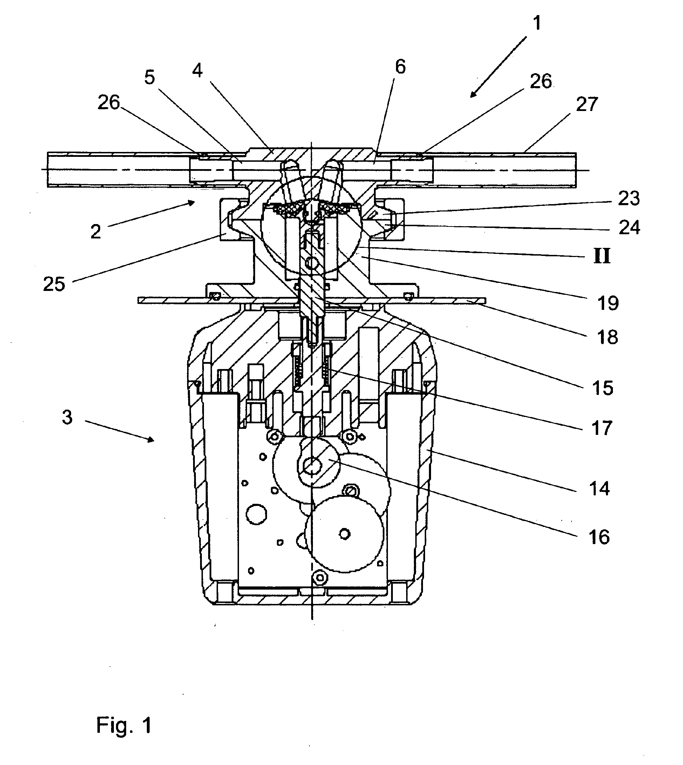

- Figur 1:: eine Seitenansicht eines Membranventils im Schnitt,

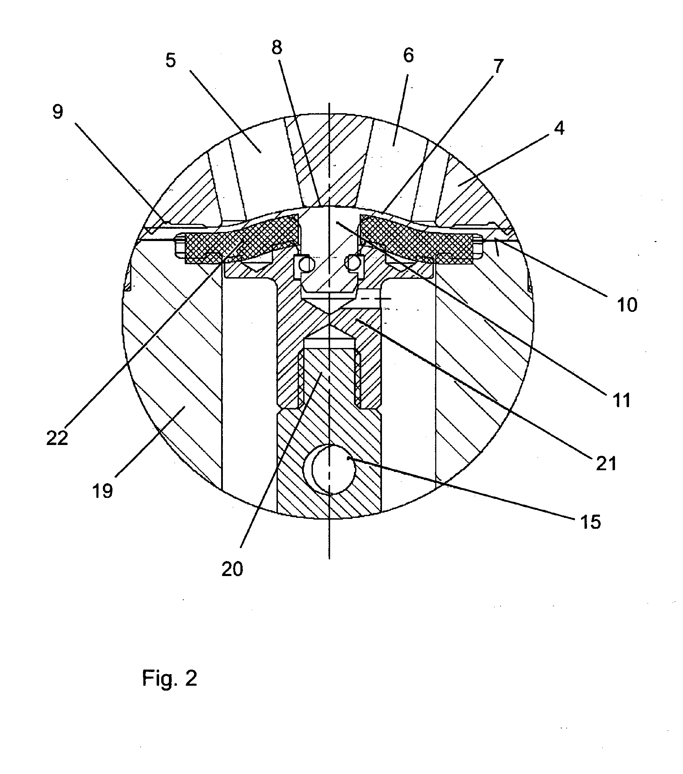

- Figur 2:: eine vergrößerte Darstellung der Einzelheit II von Figur 1,

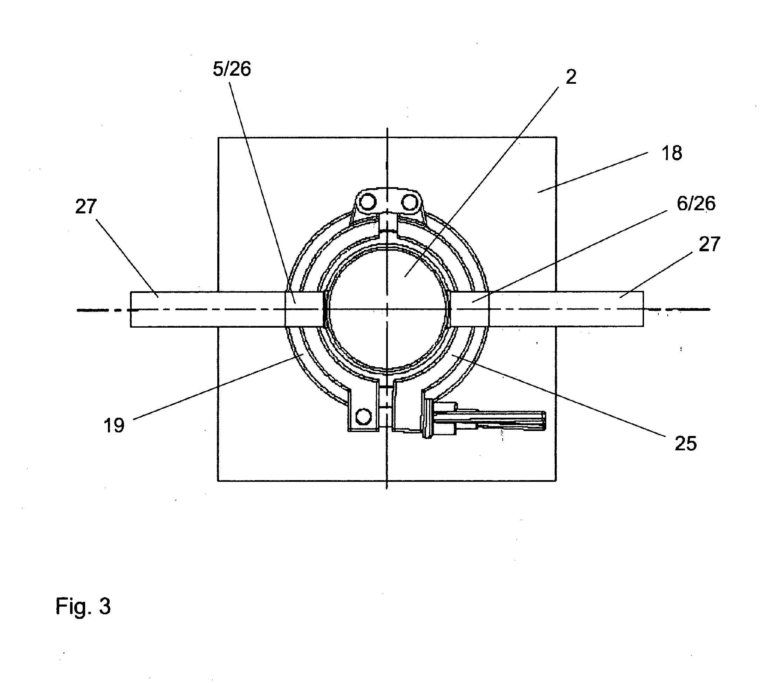

- Figur 3:: eine Draufsicht auf das Membranventil von Figur 1,

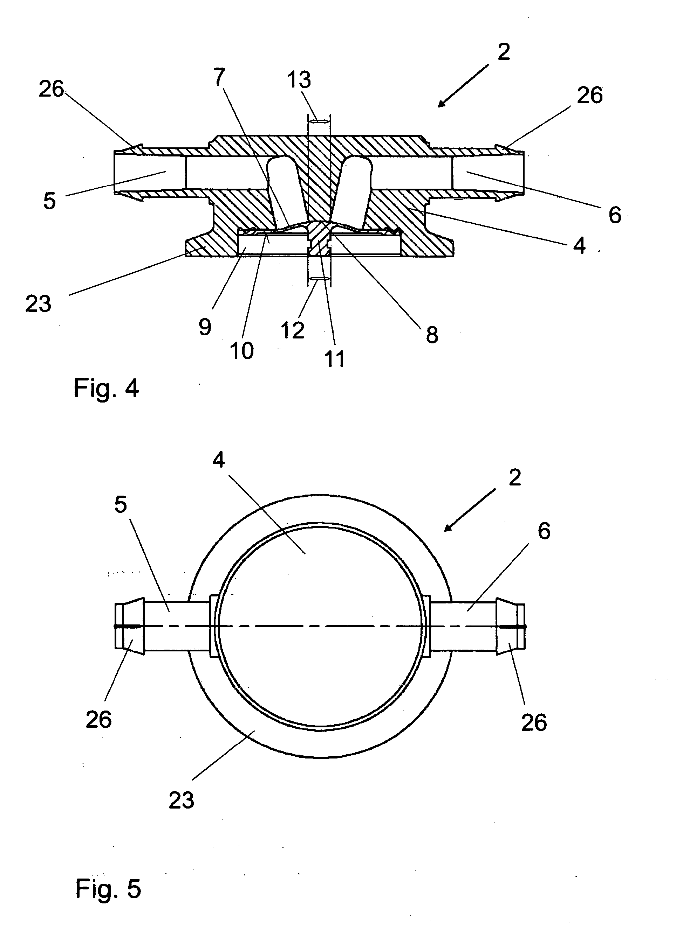

- Figur 4:: eine Seitenansicht einer Ventilkörpereinheit im Schnitt und
- Figur 5:: eine Draufsicht auf die Ventilkörpereinheit von Figur 4.

### Beschreibung der Ausführungsbeispiele

Ein Membranventil 1 besteht im Wesentlichen aus einer Ventilkörpereinheit 2, die insbesondere zur Verwendung als Einmalartikel geeignet ist, und aus einem wieder verwendbaren Antrieb 3.

Die Ventilkörpereinheit 2 besteht aus einem Ventilkörper 4 mit einem Zufluss 5 und einem Abfluss 6, die in einem zwischen dem Ventilkörper 4 und einer Dichtmembran 7 begrenzten Ventilraum münden, wobei die Verbindung zwischen Zufluss 5 und Abfluss 6 durch Drücken der Dichtmembran 7 gegen einen ventilsitz 8 unterbrochen wird. Die Dichtmembran 7 ist in einem dem Ventilsitz 8 vorgelagerten Absatz 9 des Ventilkörpers 4 angeordnet und dichtet den Ventilkörper 4 gegenüber dem Antrieb 3 und der Umgebung ab. Sowohl der Ventilkörper 2 als auch die Dichtmembran 7 sind im Ausführungsbeispiel aus Polyethylen (PE) ausgebildet. Auf ihrer dem Ventilkörper 4 abgewandten Rückseite 10 weist die Dichtmembran 7 ein zentrales an die Dichtmembran 7 angeformten Verbindungsstück auf. Das Verbindungsstück 11 weist einen Durchmesser 12 auf, der etwas größer ist als die zwischen Zufluss 5 und Abfluss 6 gebildete Breite 13 des Ventilsitzes 8. Die Dichtmembran 7 ist zum Ventilsitz 8 hin und insbesondere im festen relativ starren Bereich des Verbindungsstückes 11 konvex ausgebildet, wobei der korrespondierende Ventilsitz 8 zur Dichtmembran 7 hin entsprechend konkav ausgebildet ist. Die Dichtmembran 7 und der Ventilkörper 4 sind flüssigkeits- und gasdicht durch Ultraschallschweißung miteinander verbunden.

Der Antrieb 3 besteht im Wesendlichen aus einem topfförmigen Gehäuse 14 mit einer in Richtung ihrer Längsachse längsverschieblichen Ventilspindel 15, die von einer motorgetriebenen Steuerscheibe 16 gegen eine Federkraft einer Druckfeder 17 bewegt wird. Das Gehäuse 14 lässt sich von innen her an ein Schaltschrankblech 18 ansetzen und von außen her über ein Zwischenstück 19 befestigen. Auf das der Steuerscheibe 16 des Antriebs 3 abgewandte Ende 20 der Ventilspindel 15 ist ein Druckstück 21 aufgeschraubt, das mit dem Verbindungsstück 11 der Ventilkörpereinheit 2 bzw. der Dichtmembran 7 ver- und entrastbar ausgebildet ist. Das Druckstück 21 trägt zur Dichtmembran 7 hin eine Druckübertragungsmembran 22, die bei mit dem Antrieb 3 verbundener Ventilkörpereinheit 2 zwischen Dichtmembran 7 und dem Druckstück 21 angeordnet bzw. eingeklemmt ist. Die Druckübertragungsmembran 22 ist im Ausführungsbeispiel aus einem Ethylen-Propylen-Dien-Kautschuk (EPDM) ausgebildet. Die Druckübertragungsmembran 22 schützt zum einen die Dichtmembran 7 und bringt die Kraft vom Druckstück 21 gerichtet auf die Dichtmembran 7 auf.

Der Ventilkörper 4 weist zum Antrieb 3 hin einen Anschlussflansch 23 auf, der gegen einen entsprechenden Anschlussflansch 24 des Zwischenstückes 19 gesetzt wird. Die beiden Anschlussflansche 23, 24 werden über eine Befestigungsklammer 25 miteinander verbunden.

Der Zufluss 5 und der Abfluss 6 weisen im Ausführungsbeispiel Schlaucholiven 26 auf, die mit entsprechenden Schläuchen 27 verbunden sind.

Zur Montage wird die Ventilkörpereinheit 2 mit ihren Anschlussschläuchen 27 aus einer nicht dargestellten sterilen Verpackung entnommen und auf den Antrieb 3 aufgesetzt, so dass das Verbindungsstück 11 und das Druckstück 21 miteinander verrasten. Nach Ausrichten der Ventilkörpereinheit 2 gegenüber dem Antrieb 3 werden die Anschlussflansche 23, 24 über die Befestigungsklammer 25 miteinander verbunden, so dass die Ventilkörpereinheit 2 auf dem Antrieb 3 fixiert ist.

Nach Gebrauch wird die Befestigungsklammer 25 gelöst und die Ventilkörpereinheit 2 vom Antrieb 3 abgezogen und entsorgt.

## Patentansprüche

1. Membranventil (1) mit einem einen Zufluss (5) und einen Abfluss (6) aufweisenden Ventilkörper (4), einer Dichtmembran (7) und einem die Dichtmembran (7) mit einem Druckstück (21) eines Antriebs (3) verbindenden Verbindungsstück (11),
**dadurch gekennzeichnet,**
**dass** der Ventilkörper (4), die Dichtmembran (7) und das Verbindungsstück (11) fest miteinander zu einer abgedichteten und mit dem Antrieb (3) verbindbaren auswechselbaren Ventilkörpereinheit (2) verbunden sind, dass die Ventilkörpereinheit (2) zum Einmalgebrauch vorgesehen ist,
**dass** das Verbindungsstück (11) an die Dichtmembran (7) angeformt ist, und
**dass** der Ventilkörper (4) und die Dichtmembran (7) miteinander ultraschallverschweißt sind.

2. Membranventil nach Anspruch 1,
**dadurch gekennzeichnet,**
**dass** die Dichtmembran (7) und der Ventilkörper (4) aus Kunststoff ausgebildet sind.

3. Membranventil nach Anspruch 2,
**dadurch gekennzeichnet,**
**dass** die Dichtmembran (7) und der Ventilkörper (4) aus Polyethylen ausgebildet sind.

4. Membranventil nach einem der Ansprüche 1 bis 3,
**dadurch gekennzeichnet,**
**dass** antriebsseitig dem Druckstück (21) zur Dichtmembran (7) hin eine Druckübertragungsmembran (22) vorgelagert ist, die bei mit dem Antrieb (3) verbundener Ventilkörpereinheit (2) an der Dichtmembran (7) anliegt.

5. Membranventil nach Anspruch 4,
**dadurch gekennzeichnet,**
**dass** die Druckübertragungsmembran (22) aus einem Kunststoff ausgebildet ist.

6. Membranventil nach Anspruch 5,
**dadurch gekennzeichnet,**
**dass** die Druckübertragungsmembran (22) aus einem Ethylen-Propylen-Dien-Kautschuk ausgebildet ist.

7. Membranventil nach einem der Ansprüche 1 bis 6,
**dadurch gekennzeichnet,**
**dass** der Antrieb (3) zur Ventilkörpereinheit (2) hin ein Zwischenstück (19) aufweist, dessen freies Ende mit einem freien Ende der Ventilkörpereinheit (2) verbindbar ist.

8. Membranventil nach Anspruch 7,
**dadurch gekennzeichnet,**
**dass** die freien Enden als Anschlussflansche (23, 24) ausgebildet sind, über eine Befestigungsklammer (25) miteinander verbindbar sind.

9. Membranventil nach einem der Ansprüche 1 bis 8,
**dadurch gekennzeichnet,**
**dass** das Druckstück (21) mit einer Ventilspindel (15) des Antriebs (3) verbunden ist und dass das Druckstück (21) und das Verbindungsstück (11) miteinander verrastbar ausgebildet sind.

10. Membranventil nach einem der Ansprüche 1 bis 9,
**dadurch gekennzeichnet,**
**dass** das Verbindungsstück (11) der Ventilkörpereinheit (2) und das Druckstück (21) des Antriebs (3) in axialer Richtung durch Drehen gegeneinander ausrichtbar sind.

11. Membranventil nach einem der Ansprüche 1 bis 10,
**dadurch gekennzeichnet,**
**dass** die Dichtmembran (7) im Bereich des Verbindungsstückes (11) konvex und der Ventilkörper (4) in seinem korrespondierenden Bereich entsprechend konkav ausgebildet ist.

## Claims

1. Diaphragm valve (1) having a valve body (4) comprising an inlet (5) and an outlet (6), further having a sealing membrane (7), and a connecting piece (11) connecting the sealing membrane (7) to a pressure piece (21) of a drive (3),
**characterized by** the fact
that the valve body (4), the sealing membrane (7) and the connecting piece (11) are rigidly connected together to form an interchangeable, sealed valve body (2) that can be connected to the drive (3),
that the valve body unit (2) is designed for one-time use. that the connecting piece (11) is molded on the sealing membrane (7), and
that the valve body (4) and the sealing membrane (7) are welded ultrasonically to one another.

2. Diaphragm valve according to Claim 1,
**characterized by** the fact
that the sealing membrane (7) and the valve body (4) are made of plastic.

3. Diaphragm valve according to Claim 2,
**characterized by** the fact
that the sealing membrane (7) and the valve body (4) are made of polyethylene.

4. Diaphragm valve according to any of Claims 1 to 3,
**characterized by** the fact
that on the drive side a pressure-transmitting diaphragm (22) oriented towards the sealing membrane (7) is located in front of the pressure piece (21), said pressure-transmitting diaphragm being in contact with the sealing membrane (7) when the valve body unit (2) is attached to the drive (3).

5. Diaphragm valve according to Claim 4,
**characterized by** the fact
that the pressure-transmitting diaphragm (22) is made of a synthetic material.

6. Diaphragm valve according to Claim 5,
**characterized by** the fact
that the pressure-transmitting diaphragm (22) is made of an ethylene propylene diene monomer rubber.

7. Diaphragm valve according to any of Claims 1 to 6,
**characterized by** the fact
that the drive (3) has an intermediate piece (19) oriented towards the valve body unit (2), the free end of which can be connected to a free end of the valve body unit (2).

8. Diaphragm valve according to Claim 7,
**characterized by** the fact
that the free ends are designed as connecting flanges (23, 24) and are connected together via a fixing clamp (25).

9. Diaphragm valve according to any of Claims 1 to 8,
**characterized by** the fact
that the pressure piece (21) is connected to a valve spindle (15) of the drive (3), and that the pressure piece (21) and the connecting piece (11) are designed to lock together.

10. Diaphragm valve according to any of Claims 1 to 9,
**characterized by** the fact
that the connecting piece (11) of the valve body unit (2) and the pressure piece (21) of the drive (3) can be aligned axially by rotating them relative to each other.

11. Diaphragm valve according to any of Claims 1 to 11,
**characterized by** the fact
that the sealing membrane (7) is designed to be convex in the area of the connecting piece (11), and the valve body (4) is designed to be appropriately concave in its corresponding area.

## Revendications

1. Vanne à membrane (1) comportant un corps de vanne (4) qui comporte une entrée (5) et une sortie (6), une membrane d'étanchéité (7) et une pièce de raccord (11) qui relie la membrane d'étanchéité (7) à un élément de pression (21) d'un mécanisme de commande (3),
**caractérisée en ce que**
le corps de vanne (4), la membrane d'étanchéité (7) et la pièce de raccord (11) sont reliés de façon fixe l'un à l'autre de manière à former une unité amovible formant corps de vanne (2) qui est étanche et qui peut être reliée au mécanisme de commande (3),
l'unité formant corps de vanne (2) est prévue pour être à usage unique,
la pièce de raccord (11) est rapportée par formage sur la membrane d'étanchéité (7), et
le corps de vanne (4) et la membrane d'étanchéité (7) sont soudés l'un à l'autre par ultrasons.

2. Vanne à membrane selon la revendication 1,
**caractérisée en ce que**
la membrane d'étanchéité (7) et le corps de vanne (4) sont formés à partir d'une matière plastique.

3. Vanne à membrane selon la revendication 2,
**caractérisée en ce que**
la membrane d'étanchéité (7) et le corps de vanne (4) sont formés à partir de polyéthylène.

4. Vanne à membrane selon l'une quelconque des revendications 1 à 3,
**caractérisée en ce que**
une membrane de transmission de pression (22), qui appuie contre la membrane d'étanchéité (7) lorsque l'unité formant corps de vanne (2) est reliée au mécanisme de commande, est montée du côté du mécanisme de commande en avant de l'élément de pression (21) en direction de la membrane d'étanchéité (7).

5. Vanne à membrane selon la revendication 4,
**caractérisée en ce que**
la membrane de transmission de pression (22) est formée à partir d'une matière plastique.

6. Vanne à membrane selon la revendication 5,
**caractérisée en ce que**
la membrane de transmission de pression (22) est formée à partir d'un caoutchouc d'éthylène-propylène-diène.

7. Vanne à membrane selon l'une quelconque des revendications 1 à 6,
**caractérisée en ce que**
le mécanisme de commande (3) comporte, en direction de l'unité formant corps de vanne (2), un élément intermédiaire (19) dont l'extrémité libre peut être reliée à une extrémité libre de l'unité formant corps de vanne (2).

8. Vanne à membrane selon la revendication 7,
**caractérisée en ce que**
les extrémités libres sont conformées en collerettes de raccordement (23, 24), [qui] peuvent être reliées l'une à l'autre par une bride de fixation (25).

9. Vanne à membrane selon l'une quelconque des revendications 1 à 8,
**caractérisée en ce que**
l'élément de pression (21) est relié à une tige de vanne (15) du mécanisme de commande (3) et **en ce que** l'élément de pression (21) et la pièce de raccord (11) peuvent être conformées de façon à pouvoir s'encliqueter l'un avec l'autre.

10. Vanne à membrane selon l'une quelconque des revendications 1 à 9,
**caractérisée en ce que**
la pièce de raccord (11) de l'unité formant corps de vanne (2) et l'élément de pression (21) du mécanisme de commande (3) peuvent être alignés en direction axiale par rotation l'un par rapport à l'autre.

11. Vanne à membrane selon l'une quelconque des revendications 1 à 10,
**caractérisée en ce que**
la membrane d'étanchéité (7) est convexe dans la région de la pièce de raccord (11) et **en ce que** le corps de vanne (4), est concave de façon analogue dans la région correspondante.
